(19) Europäisches Patentamt
European Patent Office
Office européen des brevets

(11) EP 2 432 789 B1

(12) **EUROPEAN PATENT SPECIFICATION**

(45) Date of publication and mention of the grant of the patent:
**26.04.2017 Bulletin 2017/17**

(21) Application number: **10720493.5**

(22) Date of filing: **19.05.2010**

(51) Int Cl.:
***C07F 9/6571*** (2006.01) ***C08K 5/00*** (2006.01)
***C08K 5/5313*** (2006.01) ***C08L 21/00*** (2006.01)

(86) International application number:
**PCT/US2010/035359**

(87) International publication number:
**WO 2010/135398 (25.11.2010 Gazette 2010/47)**

(54) **DOPO DERIVATIVE FLAME RETARDANTS**

DOPO-DERIVATE ALS FLAMMENHEMMENDE MITTEL

IGNIFUGEANTS À BASE DE DÉRIVÉS DE DOPO

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **19.05.2009 US 179519 P**

(43) Date of publication of application:
**28.03.2012 Bulletin 2012/13**

(73) Proprietor: **Albemarle Corporation**
**Baton Rouge, LA 70801 (US)**

(72) Inventors:
- **ANGELL, Yu, Li**
  **Pasadena, TX 77505 (US)**
- **WHITE, Kimberly, M.**
  **Baton Rouge, LA 70815 (US)**
- **ANGELL, Scott, E.**
  **Pasadena, TX 77505 (US)**
- **MACK, Arthur, G.**
  **Prairieville, LA 70769 (US)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**JP-A- 11 106 619** **JP-A- 2001 270 993**
**JP-A- 2002 193 985**

- **ARTNER J ET AL: "A Novel and Effective Synthetic Approach to 9,10-Dihydro-9-oxa-10-phosphaphenanthrene-10-oxide (DOPO) Derivatives" PHOSPHORUS, SULFUR AND SILICON AND THE RELATED ELEMENTS, vol. 182, no. 9, September 2007 (2007-09), pages 2131-2148, XP008099832 ISSN: 1042-6507 DOI: 10.1080/10426500701407417**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to novel, halogen-free flame retardant derived from 9,10-Dihydro-9-Oxa-10-Phosphaphenantrene-10-oxide (DOPO). This invention also relates to the use of the halogen free DOPO derived flame retardant in polymers.

### BACKGROUND OF INVENTION

Polymers as a class of materials are generally flammable. Owing to their combustibility, thermoplastic and thermoset polymers, for example polyamides, polyesters, epoxy resins and polyurethanes, require the use of flame retardants for many applications. Typically, halogenated compounds, more specifically, aromatic polybrominated compounds, have been used as flame retardant additives in polymers. It is generally accepted that these products inhibit radical gas phase reactions from occurring in the flame when these products are ignited. This makes halogenated flame retardants very commonly used additives for different types of polymeric materials. However, during the last fifteen years or so, halogenated flame retardants have come under scrutiny because of ecological concerns. At this time, the flame retardant industry is under pressure to change to flame retardants that are perceived to be more environmentally friendly, such as organophosphorus flame retardants.

A wide variety of organophosphorus compounds have been shown in the prior art to impart flame retardancy to polymers. Most of the phosphorus-containing flame retardants provide flame retardant activity through a combination of vapor and condensed phase reactions, polymer carbonization promotion, and char formation. However, there are usually problems associated with the use of organophosphorus flame retardant materials. One source of difficulty relates to the processing of polymers, which often requires high temperatures, potentially at temperatures above 210°C and often as high as 310-350°C. Unfortunately, flame retardants often participate in decomposition or side reactions, which impart undesirable properties to the base polymer or polymer system. Other flame retardants become too volatile under processing conditions and are not effectively retained during processing.

It is desirable therefore, to develop new flame retardants, which are thermally and hydrolytically stable and able to withstand high temperature polymer processing.

Japanese Kokai Patent Application No. Hei 11[1999]-106619, Japanese Kokai Patent Application No. P2001-270993A and Japanese Kokai Patent Application No. P2002-193985A disclosed DOPO derived compounds that are useful as flame retardants. However, none of these applications produced the compound of the present invention.

### SUMMARY OF THE INVENTION

The present invention relates to a compound, useful for a flame retardant, having the following structure:

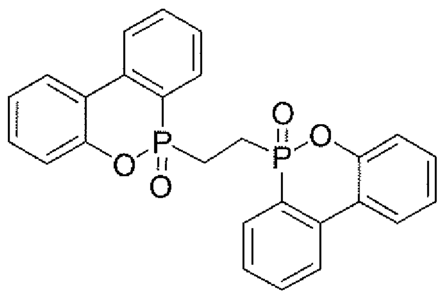

Formula I

### DETAILED DESCRIPTION OF THE INVENTION

The present invention relates to a compound, useful for a flame retardant additive, having the following structure:

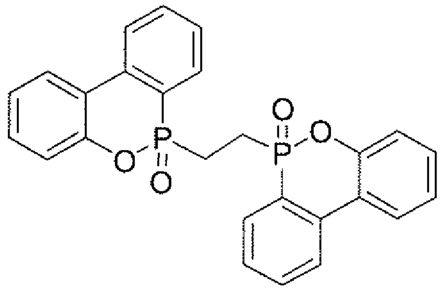

Formula I

It should be noted that the Compound of Formula I may contain small amounts of impurities from the reaction used to make the compound. The impurities may contain such components as catalysts, solvents, other reaction products, unreacted DOPO and other reactants, etc.

This invention also related to a flame retardant polymer composition comprising a polymer and the flame retardant additive of Formula I.

Polymer that may be used in the flame retardant polymer composition include, but are not limited to: polyolefins, polyesters, polyethers, polyketones, polyamides, polyvinylchlorides, natural and synthetic rubbers, polyurethanes, polystyrenes, poly(meth)acrylates, phenolic resins, polybenzoxazine, polyacetals, polyacrylonitriles, polybutadienes, polystyrenes, polyimides, polyamideimides, polyetherimides, polyphenylsulfides, polyphenylene oxide, polycarbonates, cellulose, cellulose derivatives, cyanate esters, polyphenylene esters, polybutadiene resins, butadiene-styrene resins, butadiene-divinylbenzene-styrene resins, epoxy-modified polybutadiene resins, acrylic or vinyl acetate adhesives, carboxyl-terminated butadiene-acrylonitrile copolymers, phenylene ethers, maleic anhydride-grafted butadiene-styrene copolymers, maleic anhydride-modified 4-methyl-1pentene resins, maleated 1-butene-ethylene copolymers, resins derived from vinylbenzyl ether compounds, epoxy resins or mixtures thereof. Preferably, the polymers are polyesters, phenolic resins, phenol triazine novolaks, cresol triazine novolaks, triazine phenol epoxy novolaks, triazine cresol epoxy novolaks, polyamides, polyurethanes, polystyrene, epoxy resins or mixtures thereof.

Another embodiment is when the flame retardant composition further comprises at least one conventional additive, such as heat stabilizers, light stabilizers, ultra-violet light absorbers, anti-oxidants, anti-static agents, preservatives, adhesion promoters, fillers, pigments, dyes, lubricants, mold releasers, blowing agents, fungicides, plasticizers, processing aids, acid scavengers, dyes, pigments, nucleating agents, wetting agents, dispersing agents, synergists, mineral fillers, reinforcing agents such as glass fiber, glass flake, carbon fiber, or metal fiber; whiskers such as potassium titanate, aluminum borate, or calcium silicate; inorganic fillers and other fire-retardant additives, smoke suppressants and mixtures thereof.

The other flame retardant additives which may be used with the compounds of formula I include, but are not limited to, nitrogen-containing synergists such as ammonium polyphosphate, melamine, melamine phosphate, melamine cyanurate, melamine pyrophosphate, melamine polyphosphate, phosphate and cyanurate derivatives of guanidine and piperazine, phosphazene compound, polyphophazenes, antimony oxide, silica, talc, hydrotalcite, borate salts, hydrated alumina such as aluminum hydroxide (ATH), boehmite, bismuth oxide, molybdenum oxide, or mixtures of these compounds with zinc, aluminum and/or magnesium oxide or salts.

The amount of compound of Formula I added to the polymer as a flame retardant may be varied over a wide range. Usually from about 0.1 to about 100 parts by weight of the compound of Formula I is used per 100 parts by weight of polymer. Preferably about 0.5 to about 70 parts of the compound of Formula I is used per 100 parts by weight of polymer, or from about 2 to about 50 parts by weight per 100 parts by weight of polymer.

Preferably, the compound of formula I is grounded or milled prior to combining with the polymer. The $d_{50}$ particle size after grinding or milling may be less than about 15 $\mu$m, or less than 10 $\mu$m, or less than about 5 $\mu$m, or less than about 3 $\mu$m or less than about 2 $\mu$m. The $d_{50}$ particle size may even be less than 1 $\mu$m, such as about 100 nm to 800 nm. A particle size of $d_{50}$ is the median particle size, where half the particles are above the value and half the particles are below the value. Any suitable milling or grinding technique may be used such as jet milling.

It is also preferred that the compound of Formula I have a monomodal particle size distribution, preferably when the $d_{50}$ particle size is greater than about 2 $\mu$m so that the compound may be more homogenously blended with the polymer.

To determine median particle size, a Coulter LS-230 counter or equivalent is used with its small volume module. The operating instructions of the manufacturer are followed. Alternatively, a Horiba laser light scattering instrument (*e.g.,* Horiba LA900 Model 7991) or equivalent can be used. The procedure involves weighing the sample, typically an amount in the range of about 0.01 gram to about 0.015 gram, into a clean dry aluminum cup that has been washed with deionized

water before use. The instrument autosampler disperses a 0.05 g sample in water using 0.4 mL of 1% Triton X-100 surfactant and ultrasonic treatment. This suspension is circulated through a measuring cell where the powder particles scatter a beam of laser light. Detectors in the instrument measure intensity of the light scattered. The computer in the instrument calculates mean particle size, average particle size and particle size distribution from such measurements.

Masterbatches of polymer containing the compound of Formula I of this invention, which is blended with additional amounts of substrate polymer, can contain even higher concentrations of the compound of Formula I, e.g., from about 10 to about 1000, or from about 25 to about 500, or from about 25 to about 250 parts by weight of the compound of Formula I per 100 parts by weight of polymer.

Alternatively, the amount of the phosphorus compound of Formula I in the flame retardant polymer composition is selected so the composition will contain about 0.1 wt% to about 10 wt %, or about 1.0 wt% to about 7 wt%, or about 1.2 wt% to about 5 wt%, or about 1.5 wt% to about 4 wt % phosphorous content, based on the total weight of the composition.

Particular polymers that may be used in combination with the compound of Formula I are:

A. Polyphenylene oxides and sulfides, and blends of these polymers with polystyrene graft polymers or styrene copolymers such as high impact polystyrene, EPDM copolymers with rubbers, as well as blends of polyphenylene oxide with polyamides and polyesters.

B. Polyurethanes which are derived from polyethers, polyesters or polybutadiene with terminal hydroxyl groups on the one hand and aliphatic or aromatic polyisocyanates on the other hand including polyisocyanurates, as well as precursors thereof.

C. Polyamides including copolyamides which are derived from diamines and dicarboxylic acids and/or from aminocarboxylic acids or the corresponding lactams, such as polyamide 4, polyamide 6, polyamide 6/6, polyamide 6/10, polyamide 11, polyamide 12, poly-2,4,4-trimethylhexamethylene terephthalamide or poly-m-phenylene iso-phthalamide, as well as copolymers thereof with polyethers, such as with polyethylene glycol, polypropylene glycol or polytetramethylene glycols.

D. Polyesters which are derived from dicarboxylic acids and di-alcohols and/or from hydroxycarboxylic acids or the corresponding lactones, such as polyethylene terephthalate, polybutylene terephthalate, poly-1,4-dimethylol-cyclohexane terephthalate and polyhydroxybenzoates as well as block-copolyether-esters derived from polyethers having hydroxyl end groups.

E. Polystyrene and graft copolymers of styrene, for example styrene on polybutadiene, styrene and acrylonitrile on polybutadiene, styrene and alkyl acrylates or methacrylates on polybutadiene, styrene and acrylonitrile on ethylene/propylene/diene terpolymers, styrene and acrylonitrile on polyacrylates or polymethacrylates, styrene and acrylonitrile on acrylate/butadiene copolymers, as well as mixtures thereof with random copolymers of styrene or $\alpha$-methylstyrene with dienes or acrylic derivatives, for instance the terpolymers of styrene known as ABS, MBS, ASA or AES terpolymers.

F. Epoxy resins are compounds that are prepared by polyaddition reaction of an epoxy resin component and a crosslinking (hardener) component. The epoxy resin components used are aromatic polyglycidyl ethers such as bisphenol A diglycidyl ether, bisphenol F diglycidyl ether, polyglycidyl ethers of phenol-formaldehyde resins and of cresol-formaldehyde resins, polyglycidyl ethers of phthalic, isophthalic and terephthalic acid, and also of trimellitic acid, N-glycidyl compounds of aromatic amines and of heterocyclic nitrogen bases, and also di- and polyglycidyl compounds of polyhydric aliphatic alcohols. The hardeners used are polyamines such as dicyandiamide (DICY), phenolic novolacs, cresol novolacs, triethylenetetramine, aminoethylpiperazine and isophoronediamine, polyamidoamines, polybasic acids or anhydrides thereof, for example phthalic anhydride, hexahydrophthalic anhydride, methyltetrahydrophthalic anhydride or phenols. The cross-linking may also be affected by polymerization using suitable catalysts or promoters, such as 2-phenylimidazole, 2-methylimidazole, benzyl dimethylamine (BDMA), etc.

G. Polycarbonates.

Polyesters, phenolic resins, polyamides, polyurethanes, polystyrene and epoxy resins are particularly suitable.

The flame retardant additive of Formula I may be incorporated into the polymer by a variety of mixing techniques, such as solution blending and melt blending. Examples of melt blending equipment include twin screw extruders, single screw extruders, Banbury mixers, roll mixers, kneaders, etc. The melt blending temperature depends on the resin being used and is within the range from about 100°C to about 400°C. When using an extruder for melt blending, in some instances, the extrudate exits through small die holes, and the strands of molten composition are cooled by passing through a water bath. In some cases, the extrusion temperature is not hot enough to melt the flame retardant additives. The cooled strands can be pelletized. The pellets can be used to prepare molded articles. In some instances, it is necessary to dry the composition prior to molding. A further technique is to add the flame retardant to finished polymer granules or powders and to process the mixture directly to provide a plastic article.

The method used in producing a plastic article from the flame retardant resin composition of the present invention

is not particularly limited, and any method commonly used may be employed. Exemplary such methods include moldings such as injection molding, blow molding, sheet molding, extrusion, sheet forming, Pultrusion, filament winding, thermal molding, rotational molding, resin transfer molding, hand spray-up, and hand lay-up and lamination.

The aforementioned flamed retardant may especially be used to form prepreg and/or laminates with epoxy compounds. Typical procedures for forming prepregs and laminates for printed wiring boards involve such operations as:

A) An epoxy-containing formulation such as one containing the aforementioned flame retardant with an epoxy compound is formulated with solvents and curing or polymerization agents and optionally other conventional additives described above. The formulation is applied to or impregnated into a substrate by rolling, dipping, spraying, other known techniques and/or combinations thereof. The substrate is an inorganic or organic reinforcing agent in the form of fibers, fleece, fabric, or textile material, *e.g.*, typically a woven or non-woven fiber mat containing, for instance, glass fibers or paper.

B) The impregnated substrate is "B-staged" by heating at a temperature sufficient to draw off solvent in the epoxy formulation and optionally to partially cure the epoxy formulation, so that the impregnated substrate cooled to room temperature is dry to the touch and can be handled easily. The "B-staging" step is usually carried out at a temperature of from 90°C to 240°C and for a time of from 1 minute to 15 minutes. The impregnated substrate that results from B-staging is called a "prepreg." The temperature is most commonly 100°C for composites and 130°C to 200°C for electrical laminates.

C) One or more sheets of prepreg are stacked or laid up in alternating layers with one or more sheets of a conductive material, such as copper foil, if an electrical laminate is desired.

D) The laid-up sheets are pressed at high temperature and pressure for a time sufficient to cure the resin and form a laminate. The temperature of this lamination step is usually between 100°C and 240°C, and is most often between 165°C and 200°C. The lamination step may also be carried out in two or more stages, such as a first stage between 100°C and 150°C and a second stage at between 165°C and 200°C. The pressure is usually between 50 $N/cm^2$ and 500 $N/cm^2$. The lamination step is usually carried out for a time of from 1 minute to 200 minutes, and most often for 45 minutes to 120 minutes. The lamination step may optionally be carried out at higher temperatures for shorter times (such as in continuous lamination processes) or for longer times at lower temperatures (such as in low energy press processes).

E) Optionally, the resulting laminate, for example, a copper-clad laminate, may be post-treated by heating for a time at high temperature and ambient pressure. The temperature of post-treatment is usually between 120°C and 250°C. The post-treatment usually is between 30 minutes and 12 hours.

F) Often an electrically-conductive printed circuit is applied to the copper-clad laminate.

Typically, the solvent for the epoxy resin in step A above is a ketone such as 2-butanone or methyl ethyl ketone (MEK). However, any other suitable type of conventionally-used solvent for forming these formulations can be employed. Examples of such other solvents include, but are not limited to acetone, methyl isobutyl ketone (MIBK), 2-methoxy ethanol, 1-methoxy-2-propanol, propylene glycol monomethyl ether, ethylene glycol monoethyl ether acetate, toluene, N,N-dimethylformamide, xylenes and mixtures thereof.

The curing or polymerization initializing agents that may be used for preparing the laminates are not limited to a specific curing or polymerization initializing agent as long as the agent helps polymerization of the epoxy resin in the flame retardant epoxy composition.

Examples of polymerization initializing agents are cationic polymerization initializing agents such as methane sulfonic acid, aluminum chloride, stannum chloride, trifluoroboron ethylamine complex, trifluoroboron ethylether complex and the like; radical polymerization initializing agents such as benzoyl peroxide, dicumyl peroxide, azo bis-isobutyronitrile and the like; and anionic polymerization initializing agents such as methoxy potassium, triethyl amine, 2-dimethyl aminophenol and the like and mixtures thereof.

The aforementioned epoxy curing agents include any agent known by a person skilled in the art. Examples, include but are not limited to: ethylene diamine, trimethylene diamine, tetramethylene diamine, hexamethylene diamine, meta phenylene diamine, para phenylene diamine, para xylene diamine, 4,4'-diamino diphenyl methane, 4,4'-diamino diphenyl propane, 4,4'-diamino diphenyl ether, 4,4'-diamino diphenyl sulfone, 4,4'-diamino dicyclohexane, bis (4-aminophenyl) phenyl methane, 1,5-diamino naphthalene, meta xylylene diamine, para xylylene diamine, 1,1-bis (4-aminophenyl) cyclohexane, dicyan diamide, phenol/formaldehyde novolac, cresol/formaldehyde novalac, bisphenol A novolac, biphenyl-, toluene-, xylene-, or mesitylene-modified phenol/formaldehyde novolac, aminotriazine novolac, cresol/formaldehyde/aminotriazine novolac, phenol/formaldehyde/aminotriazine novolac or mixtures thereof.

The amount of curing agent that may be used is based on the molar equivalence of curing functional groups in the curing agent to the molar equivalence of un-reacted epoxy groups in the phosphorus-containing epoxy resin. Thus, the curing agent amount may be from about 0.1 equivalence to about 10 equivalence or about 0.3 equivalence to about 5 equivalence, or about 0.7 equivalence to about 2 equivalence based on the equivalence of unreacted epoxy groups

in the phosphorus-containing epoxy resin.

The polymerization initializing agents may be added in concentrations ranging from about 0.01 wt% to about 10 wt %, or about 0.05 to about 5%, or about 0.1 wt% to about 2 wt%, based on the total weight of the cured epoxy resin.

The curing temperature may be carried out generally between about 25°C to about 250°C, or about 70°C to about 240°C or about 150°C to about 220°C.

In addition, epoxy curing agent promoters may also be used to promote curing of the epoxy compositions. These epoxy curing agent promoters are often based on imidazoles. Examples of such epoxy curing agent promoters include, but are not limited to: 1-methylimidazole, 2-methylimidazole, 1,2-dimethylimidazole, 1,2,4,5-tetramethylimidazole, 2-ethyl-4-methylimidazole, 2-phenylimidazole, 1-cyanoethyl-2-phenylimidazole, 1-(4,6-diamino-s-triazinyl-2-ethyl)-2-phenylimidazole or mixtures thereof.

When phenol novolacs are used as curing agents, the epoxy curing agent promoter may be added in concentrations ranging from about 0.0001 wt% to about 5 wt %, or about 0.01 to about 3%, or about 0.1 wt% to about 2 wt%, or about 0.15 wt% to about 1 wt%, based on the weight of curing agent used. Higher concentrations of promoter may be used with different curing agents, such as DICY, dicyandiamide, where promoter concentrations are more typically in the 5-25 wt% range, based on weight of curing agent.

The curing temperature may be carried out generally between about 25°C to about 250°C, or about 70°C to about 240°C or about 150°C to about 220°C.

**Reaction Procedure**

The present invention also relates to a process of making a compound having the following structure:

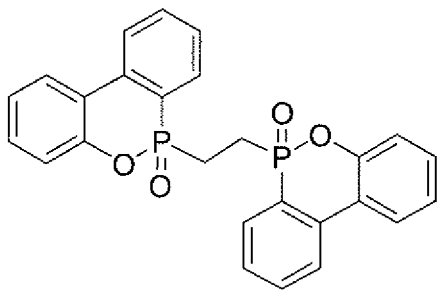

Formula I

comprising reacting a compound of Formula A

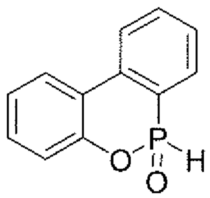

Formula A

with dihaloethane, such as dichloroethane or dibromoethane, in the presence of a base selected from potassium methoxide, sodium methoxide, lithium methoxide, potassium ethoxide, sodium ethoxide, lithium ethoxide, potassium t-butoxide, sodium t-butoxide, lithium diisopropyl amide and mixtures thereof. Preferred are potassium t-butoxide and sodium methoxide.

Any suitable amount of base may be used in the process of this invention. Such suitable amounts include from about 0.1 to about 10 equivalence, or about 0.5 to about 5 equivalence, based on the amount of the compound of Formula A.

The process may also contain an optional solvent. Examples of such solvents may include, but are not limited to, heptane, hexane, petroleum ether, methylcyclohexane; toluene, xylene, ethyl benzene, tetrahydrofuran, dimethyl sulfoxide (DMSO), 1,4-dioxane, dimethyl formamide (DMF), dimethylacetamide (DMAc), acetonitrile, ethylene glycol dimethyl ether, ethylene glycol diethyl ether or mixtures thereof.

The process may be conducted at temperatures ranging from about -10°C to about 100°C.

Another process used to produce the above compounds of Formula I may be found in U.S. Provisional Application No. 61/319580, entitled Process for the Preparation of DOPO-Derived Compounds, filed on March 31, 2010, herein incorporated by reference in its entirety. In that process, DOPO is reacted with ethylene glycol, in the presence of a catalyst at temperatures ranging from about 100°C to about 250°C. The catalyst that may be used is any suitable catalyst for dehydration and/or Arbuzov reactions. General suitable catalysts are alky halides, alkali halides, alkaline earth metal halides, transition metals and their halides or acid catalysts such as methyl p-toluenesulfonate, ethyl p-toluenesulfuonate. Arbuzov reaction catalysts are especially suitable. The process may optionally use a solvent, preferably a high boiling point solvent and an optional entrainer.

It is preferred that the purity of the compound of Formula I, especially when used in Flame retardant applications, should be greater than about 95%, or about 98% or about 99%. The purity levels can be measured by using NMR spectroscopy. One skilled in the art of NMR spectroscopy can develop a procedure for measuring the purity of the compound of Formula I.

One NMR spectroscopy procedure that may be used to measure the purity of the compound of Formula I is discussed below. This procedure is suitable for the determination of purity by weight percent normalization versus observed impurities. This procedure is suitable for Formula I samples that can be completely dissolved in chloroform. Alternatively, if insoluble material is present, the purity of the sample may be assayed by 1H-NMR spectroscopy or 31P-NMR spectroscopy versus an internal standard such as trimethylphosphate. If an internal standard is used, assure that adequate prepulse delays are used to allow all nuclei of interest to return to equilibrium before further RF pulses.

Sample Prep:

Sample may be prepared on lab bench top by transferring about 500 mg of sample into a clean glass vial. It is unnecessary to record weight of sample. Add ~1-2 mL of $CDCl_3$ (>98 % D) containing tetramethylsilane (TMS) to the vial. Cap and shake sample on vortex shaker until sample is completely dissolved. Transfer about 1 mL of above solution to a clean, dry 5 mm NMR tube. Acquire a $^1H$ NMR spectrum using an inverse gated $^{13}C$ decoupling experiment. The following parameters are suitable for detection of impurities present at about 100 ppm levels and higher:

Acquisition Parameters:

Nucleus: 1H; Pulse program: zgig30; Collected data points (TD): 64k; Spectral Width (SWH): ~7000 Hz; Prepulse delay (D1): 60 sec minimum (use adequate prepulse delay to ensure all observed nuclei have adequate relaxation time); Acquisitions (NS): 4 scans minimum (enough scans to provide good signal to noise); Lock Solvent: CDCl3.

Process, using the *efp* command as a shortcut to perform the following: *em* (exponential multiplication window function,) *ft* (Fourier transform,) and *pk* (phase correction.) Manually phase correct the spectrum if necessary. Calibrate the chemical shift of the TMS peak to 0.0 ppm. The following processing parameters are suitable: SI: 64k; Line broadening (LB): 0.2 Hz

Integrate the following peaks in the $^1H$-NMR spectrum, paying careful attention to the slope and bias of each integral:

Formula I compound [mulitplet, ~8.2 to ~7.6 ppm, 8 H, **H**-Ar], FW = 458.4 g/mol DOPO [singlet, ~8.6 ppm, 0.5 H, **H**-P], FW = 216.2 g/mol
Para-xylene solvent [singlet, ~7.1 ppm, 4H, **H**-Ar], FW = 106.2 g/mol
Ethylene glycol [singlet, ~3.6 ppm, 4H, $\mathbf{H_2}$CO], FW = 62.1 g/mol
Isopropyl alcohol (IPA) [doublet, ~1.2 ppm, 6H, $\mathbf{H_3}$C-C], FW = 60.1 g/mol

Spectral Interpretation and Calculations:

Formula I compound $^1H$-NMR spectrum consists of the following peaks: series of multiplets from ~8.0 ppm to ~7.2 ppm representing 16 aromatic protons and a multiplet centered @ ~2.4 ppm representing the four protons of the ethylene bridge.
A normalized wt% of each component using the following formula:

$$\text{Wt \% of component} = (A1/B1*C1)*100 / \Sigma[(A1/B1*C1)+(A2/B2*C2)+\ldots]$$

A = Area of component peak
B = # Nuclei represented by component peak

C = MW of component

It is preferred that the compound of Formula I is substantially or completely free of organic bases because organic bases may deleteriously affect its use as a flame retardant, especially when used in epoxies. Substantially free of organic bases means that the levels are less than about 10,000 ppm, or less than about 1000 ppm, or less than about 100 ppm or less than about 10 ppm. One method to have the compound of Formula I be substantially or completely free of an organic base is not to use the any organic base in the reaction to produce the compound. One method to determine the amount of organic base, if any, is NMR spectroscopy.

An organic base is an organic compound, which acts as a base. Organic bases are usually, but not always, proton acceptors. They usually contain nitrogen atoms, which can be readily protonated. Amines and nitrogen-containing heterocyclic compounds are typically organic bases. Examples include, but are not limited to pyridine, methyl amine, trimethylamine, triethylamine, tripropylamine, tributylamine, N-ethylmorpholine, imidazole, benzimidazole, histidine, phosphazene bases and carbonates or hydroxides of some organic cations.

It is preferred that the compound of Formula I is substantially free of unreacted DOPO because DOPO may deleteriously affect its use as a flame retardant. Substantially free of DOPO means that the levels are less than about 50,000 ppm, or less than about 20,000 ppm, or less than about 10,000 ppm or less than about 1000 ppm or less than about 100 ppm. A preferred method to reduce the DOPO is to wash the product with water or water miscible solvents such as alcohols (e.g., isopropanol), aldehydes or ketones (e.g., acetone) before and/or after filtration. DOPO levels may be measured by using NMR spectroscopy.

It is preferred that the amount of solvent remaining in the compound of Formula I after purification should be less than about 1000 ppm, or less than about 100 ppm, or less than about 50 ppm. The amount of solvent may be measured by using NMR spectroscopy.

One method to reduce the amount of solvent in the compound of Formula I is drying under vacuum or with nitrogen sweep at temperature from about 100°C to 170°C for about 2 to about 24 hours. If the compound is grounded or milled, it is preferred to do at temperatures above room temperature, such as by hot air jet milling to further reduce volatiles.

It is preferred that the compound of Formula I have incorporated volatiles less than about 5000 ppm or less than about 2000 ppm or less than about 1000 ppm. The volatile may be measured using a loss on drying method. This method may use a HR 73 Halogen Moisture Analyzer from Mettler Toledo. The method requires addition of between 1 g to 10 g of sample to a clean, tared aluminum pan, which is placed in the moisture balance of the Moisture Analyzer. The aluminum dish is removed and gently shaken to spread out sample. The dish is replaced, and the "Start" key is pressed to begin the drying program. The sample is quickly heated from ambient to 200 °C and held isothermal until the sample is dry. The condition for "dry" requires that.no change in weight occurs >1 mg per 140 seconds. Loss on drying is automatically calculated by the system as 100 X (initial weight-final weight)/initial weight). When the program is complete, the percent weight loss result will be displayed.

The peak melting point of the compound of Formula I is prefrerably greater than about 245°C or about 250°C. For determining peak melting point, a differential scanning calorimeter (DSC) may be used such as a "TA Instruments Q200" analyzer with its standard DSC cell. The DSC is connected to a PC, which provides user interface and operational system control. The temperature scale is calibrated at 10 °C/min using the melting points of gallium, indium, lead and zinc reference standards. The heat flow scale is calibrated using the heat of fusion of indium. The baseline response is calibrated at 20 °C/min with a synthetic sapphire heat capacity standard. All of these calibrations should be performed according to the instrument manufacturers recommended procedures.

The samples are run in gold plated stainless steel crucible at 10 °C/min from 0 °C to 400 °C. A raw data file containing the sample heat flow and temperature data is saved to the PC hard drive during the measurement. After the DSC measurement is finished the raw data file is analyzed for melt behavior. The melting endotherm is integrated to yield, extrapolated onset temperature, peak temperature and heat of fusion.

The TA Instrument software is used to determine the peak melting point by selecting temperature points above and below the peak. If a sample exhibits multiple peaks, then multiple peak melting points will be reported. The peak melting point is the maximum endotherm for a particular melting transition. The peak maximum determination is an analysis used to determine the most remote point, relative to the baseline, within the chosen limits.

It is also preferred that the compound of Formula I have a thermogravimetric analysis (TGA) weight loss of 5% at temperatures greater than about 245°C or about 250°C for most flame retardant applications. The thermogravimetric analyses (TGA) may be performed on a "TA Instruments Q500" analyzer. The TGA is connected to a PC, which provides user interface and operational system control. The temperature scale is calibrated using certified Curie temperatures of alumel and nickel reference standards. The microbalance is calibrated using certified reference weights. Both of these calibrations should be performed according to the instrument manufacturers recommended procedures. 10 mg to12 mg samples are heated at 10 °C/min under nitrogen from room temperature to 500 °C in platinum sample pans. A raw data file containing the sample weight and temperature data is saved to the PC hard drive during the measurement. After the

TGA measurement is finished the raw data file is analyzed for 1%, 2%, 5%, 10% and 50% weight loss temperatures.

It is also preferred that the compound of Formula I have total chlorine or bromine levels less than about 1,000 ppm, or less than about 500 ppm or less than about 100 ppm. One method to reduce the total chlorine or bromine levels is to use the ethylene glycol reaction procedure described above without a chlorine-based or bromine-based catalyst or solvent.

Total chlorine or total bromine levels may be determined by the Shoeniger method. This method involves burning in an oxygen-rich atmosphere, a sample of known weight. The liberated chlorine or bromine is reduced to the chloride or bromide with sodium arsenite in a basic medium.

The chloride or bromide content is determined by titrating with silver nitrate to a potentiometric and point, using a silver titrode electrode to signal the end point. The automatic potentiometric nitrator can be a Metrohm 716 or 736 titrator, or equivalent, capable of dynamic or constant millivolt titration. The silver titrode electrode is a Metrohm 6.0430.100 electrode (catalog number 2094850-7) or equivalent. A Schoeniger combustion flask with standard tapered joint stopper and platinum carrier, and a Thomas-Ogg oxygen flask infrared igniter (Arthur H. Thomas, Product No. 6516-G10) are used. If desired, a Halogen Projector Lamp, model DFN/DFC 150W-125V can be employed in place of a Thomas-Ogg oxygen flask infrared igniter. Deionized or distilled water, isopropyl alcohol, 1:1 sulfuric acid solution formed from equal volumes of concentrated sulfuric acid and deionized or distilled water, a caustic-arsenite solution formed by mixing together 60 g of NaOH and 60 g of $As_2O_3$ and 1 liter of water with stirring, 0.1N standardized silver nitrate solution, powdered cane sugar, dry compressed oxygen, and 0.1 % methyl orange indicator solution in distilled water are the chemicals used in the procedure.

In conducting the Schoeniger procedure with a solid sample, an amount of 0.04 to 0.08 g of sample, weighed to 0.00001 g accuracy, on creased black filter paper is folded inside the filter paper and placed in the platinum sample holder of the Thomas-Ogg combustion flask. If the sample is a liquid, to a 0.04 to 0.08 g sample, weighed to the same accuracy, in a tarred number 3 gelatin capsule, is added approximately an equal volume of powdered cane sugar, the capsule is placed in the platinum sample holder of the Thomas-Ogg combustion flask, and a black strip of paper is inserted between the capsule and the platinum sample holder. Then, the following steps are taken: (a) To the combustion flask add 15 mL of caustic arsenite solution and 3 drops of ammonium hydroxide, (b) Flush the flask thoroughly for at least two minutes with oxygen. Liberally apply silicone grease to the stopper/sample holders, place holder in the top of the flask and flush for at least one more minute. Stopper the flask with the stopper onto which the platinum carrier with the weighed sample is attached, and secure so that the flask is gas tight when inverted. The silicone grease should form a continuous seal around the entire joint surface. If any gaps are present add more grease, (c) Place the inverted combustion flask into the Thomas-Ogg oxygen flask infrared igniter, align igniter with paper, and light the sample by turning on the infrared lamp to ignite the paper, (d) As soon as the sample has burned, swirl contents of the flask several times to coat the inside walls, (e) Allow the flask to stand for 30 minutes while shaking the flask frequently during the first five or six minutes and occasionally for the last twenty minutes, (f) Rinse the platinum sample carrier and the inside walls of the flask thoroughly with deionized or distilled water. Add 1 pellet of KOH, 2 drops of methyl orange indicator, and 5-6 boiling stones. Bring to boil and evaporated excess water until volume is about 40-50 mL, (g) Quantitatively transfer the contents of the flask into a 200 mL tall form beaker. The total volume of sample and rinsing should be approximately 100-120 mL. Follow with two to three 10 mL rinses using IPA, (h) Drop in a magnetic stirring bar and place the beaker on a magnetic stirrer. Acidify to pink endpoint with 10 mL of 1:1 $H_2SO_4$. If the solution is still yellow add additional 5 mL aliquots of 1:1 $H_2SO_4$ as needed to reach a pink endpoint. Dissolved $CO_2$ will be liberated as the acid is added, (i) Introduce the silver titrode into the sample, and titrate with 0.1 or 0.01 N $AgNO_3$ on the autotitrator according to manufacturer's instructions, (j) Run a blank through all above steps, omitting only the sample, and (k) Calculate weight % Chloride or Bromide.

$$\%\ \text{Cl (or Br)} = \frac{(\text{S-B})(\text{N})\ (7.9904)}{\text{Sample Weight in Grams}}$$

where S is the milliliters of silver nitrate required to titrate the sample, B is the milliliters of silver nitrate required to titrate the blank, and N is the normality of the silver nitrate solution.

The above method works well if Total chlorine or bromine are ~2,000 ppm or higher. If total chlorine or bromine content are less than ~2,000 ppm, the Schoeniger combustion method can be used, but instead of titrating with silver nitrate, analysis of chloride or bromide is determined by ion chromatography.

The required equipment includes a Dionex DX-500 ion chromatograph or equivalent, equipped with a conductivity detector; a Dionex PeakNet chromatography data collection and processing system and a Dionex IonPac® AS11-HC column equipped with Dionex IonPac® AG11-HC guard column.

The ion chromatographic operating conditions involve (a) as eluent: EG40 KOH gradient, (b) flow-rate: 1.5 mL/min, (c) injection volume: 25 μL, (d) detector range: 200 μS, (e) suppressor: ASRS-Ultra 4 mm, (f) suppressor current: 100 mA, and (g) regenerant: Autosuppression recycle mode. The EG40 operating conditions are as listed in the following table.

| Time | Condition | Concentration |
|---|---|---|
| -7.100 | Concentration = | 30.00 |
| -7.00 | Concentration = | 5.00 |
| -1.200 | Autosampler Closed | |
| 0.000 | ECD. Autozero Concentration = Inject Position ECD_1.AcqOn<br>Concentration = | 5.00<br>5.00 |
| 28.000 | Concentration = | 30.00 |
| 28.00 | ECD_1.AcqOff Concentration = | 30.00 |
| Wait | Wait | Ready |

The required chemicals are (a) deionized water with a specific resistivity of 17.8 megohm-cm or greater.

For standardization quality control, a standard solution "B" is prepared as follows: A concentrated chloride or bromide standard solution (1,000 μg/mL) is prepared by weighing 0.329 g of sodium chloride or sodium bromide into a 100-mL volumetric flask, diluting to volume with deionized water and mixing well. This is standard solution "A". The chloride or bromide calibration standard solution "B" is prepared by pipetting 100 μL of the concentrated chloride or bromide standard solution into a 100-mL volumetric flask, which is then filled to volume with deionized water and mixed well. This provides a standard solution "B" of 1 μg/mL as chloride or bromide. Two aliquots of the latter chloride or bromide calibration standard solution are loaded into individual autosampler vials for duplicate analysis.

Using a disposable pipet, an aliquot of sample is removed from the combustion vessel after all rinses and filtered through a GHP Polypro syringe filter. (i) 25 μL of the filtered sample is injected into the ion chromatograph and analyzed using the above operating conditions.

The calculations used are as follows:

a) This method uses the response factor calculated from duplicate injections of the individual standard solution "B". The response factor is calculated using the equation:

$$RF = \frac{\text{Avg. Peak Area (2 injections)}}{\text{Standard Concentration } (\mu g/mL)}$$

b) The area of the chloride or bromide peak for each sample run is corrected for the area of the chloride or bromide peak in the blank in accordance with the expression:

$$A_S - A_b = A$$

where: $A_S$ is the area of the sample peak; $A_b$ is the area of the blank peak; and A is the corrected area of the sample peak.

c) The corrected chloride or bromide area for each sample preparation is used to determine the total concentration of chloride or bromide in the sample using the expression:

$$\text{ppm Cl (or Br)} = \frac{A \times V}{RF \times W}$$

where A is the corrected area of the sample, RF is the response factor for chloride or bromide, W is the amount of

sample expressed in grams and V is the total volume of the aqueous solution).

The following Examples illustrate the present invention. It is to be understood, however, that the invention, as fully described herein and as recited in the claims, is not intended to be limited by the details of the following Examples.

**EXAMPLE 1**

6H-Dibenz[c,e][1,2]oxaphosphorin, 6,6'-(1,4-ethanediyl)bis-, 6,6'-dioxide

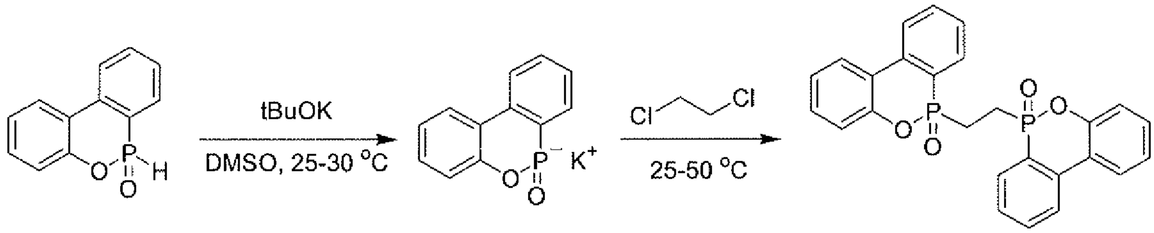


| Component | MW (g/mol) | m.p (°C) | b.p (°C) | Physical state | moles | grams | mls | Eq. |
|---|---|---|---|---|---|---|---|---|
| DOPO, CAS # 35948-25-5 TCI America | 216.17 | 119 | - | Solid | 1.96 | 423 | - | 2.1 |
| *t*BuOK, CAS # 865-47-4, Sigma-Aldrich, St. Louis, MO | 112.21 | 256-258 | - | Solid | 2.05 | 230 | - | 2.2 |
| DMSO, CAS # 67-68-5, Sigma-Aldrich, St. Louis, MO | 78.13 | 16-19 | 189 | Liquid | 21.12 | 1650 | 1500 | 12 |
| Dichloroethane CAS # 75-34-3, Sigma-Aldrich, St. Louis, MO | 98.96 | -35 | 83 | Liquid | 0.93 | 92 | 73 | 1.0 |

A 4-neck 5L half-jacketed reactor was fitted with an addition funnel, thermocouple, mechanical stirrer and nitrogen flow. The reactor was charged with potassium t-butoxide (tBuOK) (230 g, 2.05 mol) and 1.5 L of anhydrous DMSO as solvent. The mixture was stirred at room temperature until it became a homogenous solution. The solution was cooled to 10°C, and DOPO (423 g, 1.96 mol) was added in nine small portions, keeping the reaction temperature below 30 °C (50-60 g per portion). Dichloroethane (92 g, 0.93 mol) in a 125 ml addition funnel was added to the above solution slowly during 1h. The reaction was heated to 50 °C for 1h. The reaction was cooled to 10 °C, and water (3 L) was added. The slurry was filtered, and the wet cake was washed with water, acetone and ethyl acetate to give 532 g of crude wet material. The crude material was refluxed in MeCN/ethanol/H2O (5320 ml, v:v:v = 1:1:0.5) and cooled to 5 °C slowly. The white solid was filtered through a coarse fritted funnel and dried in a vacuum oven for 8 h at 80 °C to afford a dry white powder (260 g, 68 wt% yield, 99.4 wt% purity, 253-269 °C m.p.). $^{31}$P-NMR(162 MHz, $CDCl_3$): δ 36.45, 36.25 ppm and $^1$H-NMR (400MHz, $CDCl_3$): δ 7.95 (d, J = 8 Hz, 2H, ArH), 7.88 (d, J = 8 Hz, 2H, ArH), 7.79-7.69 (m, 4H, ArH), 7.48 (dd, J = 7.2 Hz, 14.4 Hz, 2H), 7.37 (dd, J = 7.2 Hz, 7.2 Hz, 2H, ArH), 7.29-7.24 (m, 2H, ArH), 7.16 (d, J = 12 Hz, 2H, ArH), 2.31 (m, 4H) ppm.

**EXAMPLE 2**

Use of 6H-Dibenz[c,e][1,2]oxaphosphorin, 6,6'-(1,4-ethanediyl)bis-, 6,6'-dioxide in epoxy laminate (4% phosphorus content)

In general, stock solutions of advanced resin, curative and promoter are all prepared and stored separately to facilitate experimentation. An 85wt% phenol epoxy novolac resin solution, DEN® 438-EK85, containing 15 wt% 2-butanone (MEK) was obtained from The Dow Chemical Company. Durite SD-1702 novolac curing agent was obtained

from Hexion Corporation. A novolac resin solution was prepared by dissolving 50 wt% SD-1702 in 50 wt% MEK solvent.

The flame retardant of Example 1 (6H-Dibenz[c,e][1,2]oxaphosphorin, 6,6'-(1,4-ethanediyl)bis-, 6,6'-dioxide) containing 13.5 wt%P was ground using a coffee bean grinder to reduce the particle size of the DOPO compound to a $d_{50}$ of about 6 μm (bimodal distribution) prior to combining with the polymer. A flame retardant resin mixture containing 4.0 wt%P was prepared by blending 6.31 g of 85wt% DEN 438 solution, 6.30 g of 50wt% SD-1702 solution, 3.59 g flame retardant, 0.006 g 2-phenylimidazole promoter (approximately 1.1 mL of a solution containing 0.277 g 2-PhI in 50 mL MEK). The novolac to promoter ratio was about 525. The flame retardant was insoluble in the resin solution until making contact with the hot gel plate, where it dissolved completely at high temperature. About 0.5-1 mL of the resin mixture was added to a hot cure plate (Thermo-electric company) at about 162-164°C. A tongue depressor was split in half lengthwise, and half of the depressor was used to move the resin on the hot plate until stiffness was noted and then lifting the resin with the flat part of the depressor until string formation ceased. The gel time was 4 minutes, 43 seconds, determined by the point where resin "strings" could no longer be pulled from the resin mixture and the epoxy became "tack free".

A larger flame retardant resin varnish containing 4.0 wt%P was prepared in an 8 oz wide-mouth glass jar by adding 63.14 g of 85wt% DEN 438 solution, 63.00 g of 50wt% SD-1702 solution, 35.92 g flame retardant and 0.060 g 2-phenylimidazole promoter. An additional 30 g MEK was added to the resin solution. The resin mixture was mixed thoroughly using a high shear mixer stirred at 6,000 rpm for about 15 minutes.

An 11 inch by 11 inch square woven glass fabric (7628 glass with 643 finish from BGF Industries) was cut to size from a large roll and stapled to wood supports (12 inches long, 1 inch wide and 1/16 inch thick) on the top and bottom ends of the fabric. The wood supports contained holes in the corners for inserting paper clips on one end for hanging the fabric in the B-stage oven. The A-stage, or resin varnish, was painted on the front and back of the fabric. Paper clips were unfolded and inserted into the both holes of one wood support. The resin-saturated fabric was hung from aluminum supports in a laboratory fume hood and allowed to drip dry for about one minute before hanging in a pre-heated (to 170 °C) forced air Blue M oven (Lab Safety Supply Inc., a unit of General Signal) for 3 minutes, 50 seconds. The edges of the B-staged prepreg were removed by reducing the sheet dimensions to 10 inch by 10 inch. The sheet was cut into four 5 inch by 5 inch sheets and weighed before stacking the four layers of prepreg between two layers of Pacothane release film (Insulectro Corp.) and two steel plates (1/8 inch thick, 12 inch by 12 inch square dimensions). The laminate was formed in the hot press at 5,000 psig for 1 hour. The resulting laminate was 0.034 inches thick, contained 45 wt% resin and underwent 13 wt% resin overflow during pressing. Five 0.5 inch wide coupons were cut from the laminate using a diamond saw, and the coupon edges were smoothed with sandpaper. The flammability of the coupons were screened by ASTM D3801-06 using an Atlas UL-94 burn chamber, resulting in a V-0 rating with 32 seconds total burn time for the two ignitions on all five coupons.

## EXAMPLE 3

Use of 6H-Dibenz[c,e][1,2]oxaphosphorin, 6,6'-(1,4-ethanediyl)bis-, 6,6'-dioxide in epoxy laminate (3% phosphorus content)

In general, stock solutions of advanced resin, curative and promoter are all prepared and stored separately to facilitate experimentation. An 85wt% phenol epoxy novolac resin solution, DEN® 438-EK85, containing 15 wt% 2-butanone (MEK) was obtained from The Dow Chemical Company. Durite SD-1702 novolac curing agent was obtained from Hexion Corporation. A novolac resin solution was prepared by dissolving 50 wt% SD-1702 in 50 wt% MEK solvent.

The flame retardant of Example 1 (6H-Dibenz[c,e][1,2]oxaphosphorin, 6,6'-(1,4-ethanediyl)bis-, 6,6'-dioxide) containing 13.5 wt% P was ground using a coffee bean grinder to reduce the particle size of the DOPO compound to a $d_{50}$ of about 6 μm (bimodal distribution) prior to combining with the polymer. A flame retardant resin mixture containing 3.0 wt% P was prepared by blending 126.3 g of 85wt% DEN 438 solution, 126.0 g of 50wt% SD-1702 solution, 48.8 g flame retardant, 0.12 g 2-phenylimidazole promoter. The novolac to promoter ratio was about 525. The flame retardant was insoluble in the resin solution until making contact with the hot gel plate, where it dissolved completely at high temperature. About 0.5-1 mL of the resin mixture was added to a hot cure plate (Thermo-electric company) at about 162-164°C. A tongue depressor was split in half lengthwise, and half of the depressor was used to move the resin on the hot plate until stiffness was noted and then lifting the resin with the flat part of the depressor until string formation ceased. The gel time was 4 minutes, 22 seconds, determined by the point where resin "strings" could no longer be pulled from the resin mixture and the epoxy became "tack free". An additional 70 g MEK was added to the resin solution. The resin mixture was mixed thoroughly using a high shear mixer stirred at 6,000 rpm for about 15 minutes.

An 11 inch by 11 inch square woven glass fabric (7628 glass with 643 finish from BGF Industries) was cut to size from a large roll and stapled to wood supports (12 inches long, 1 inch wide and 1/16 inch thick) on the top and bottom ends of the fabric. The wood supports contained holes in the corners for inserting paper clips on one end for hanging the fabric in the B-stage oven. The A-stage, or resin varnish, was painted on the front and back of the fabric.

Paper clips were unfolded and inserted into the both holes of one wood support. The resin-saturated fabric was hung from aluminum supports in a laboratory fume hood and allowed to drip dry for about one minute before hanging in a pre-heated (to 170 °C) forced air Blue M oven (Lab Safety Supply Inc., a unit of General Signal) for 3 minutes, 30 seconds. The edges of the B-staged prepreg were removed by reducing the sheet dimensions to 10 inch by 10 inch. The sheet was cut into four 5 inch by 5 inch sheets and weighed before stacking the four layers of prepreg between two layers of Pacothane release film (Insulectro Corp.) and two steel plates (1/8 inch thick, 12 inch by 12 inch square dimensions). The laminate was formed in the hot press at 5,000 psig for 1 hour. The resulting laminate was 0.037 inches thick, contained 49 wt% resin and underwent 3 wt% resin overflow during pressing. Five 0.5 inch wide coupons were cut from the laminate using a diamond saw, and the coupon edges were smoothed with sandpaper. The flammability of the coupons were screened by ASTM D3801-06 using an Atlas UL-94 burn chamber, resulting in a V-1 rating with 56 seconds total burn time for the two ignitions on all five coupons. No single burn was greater than 10 seconds.

**Comparison Example 4**

Laminate Preparation from DEN 438 Novolac Epoxy Resin with No Flame Retardant

In general, stock solutions of advanced resin, curative and promoter are all prepared and stored separately to facilitate experimentation. An 85wt% phenol epoxy novolac resin solution, DEN® 438-EK85, containing 15 wt% 2-butanone (MEK) was obtained from The Dow Chemical Company. Durite SD-1702 novolac curing agent was obtained from Hexion Corporation. A novolac resin solution was prepared by dissolving 50 wt% SD-1702 in 50 wt% MEK solvent.

A resin mixture containing no flame retardant was prepared by blending 113.64 g of 85wt% DEN 438 solution, 113.40 g of 50wt% SD-1702 solution and 0.0705 g 2-phenylimidazole promoter into a 400 mL disposable plastic beaker. The novolac to promoter ratio was about 804. About 0.5-1 mL of the resin solution was added to a hot cure plate (Thermo-electric company) at about 162-164°C. A tongue depressor was split in half lengthwise, and half of the depressor was used to move the resin on the hot plate until stiffness was noted and then lifting the resin with the flat part of the depressor until string formation ceased. The gel time was 5 minutes, 30 seconds, determined by the point where resin "strings" could no longer be pulled from the resin mixture and the epoxy became "tack free".

A 12 inch by 12 inch square woven glass fabric (JPS 7628 Fiber Glass Cloth having a CS-718 finish) was cut to size from a large roll and stapled to wood supports (12 inches long, 1 inch wide and 1/16 inch thick) on the top and bottom ends of the fabric. The wood supports contained holes in the corners for inserting paper clips on one end for hanging the fabric in the B-stage oven. The A-stage, or resin varnish, was painted on the front and back of the fabric. Paper clips were unfolded and inserted into the both holes of one wood support. The resin-saturated fabric was hung from aluminum supports in a laboratory fume hood and allowed to drip dry for about one minute before hanging in a pre-heated (to 170 °C) forced air Blue M oven (Lab Safety Supply Inc., a unit of General Signal) for a period of time between 4 minutes, 10 seconds and 4 minutes, 30 seconds. The edges of the B-staged prepreg were removed by reducing the sheet dimensions to 10 inch by 10 inch. The sheet was cut into four 5 inch by 5 inch sheets and weighed before stacking the four layers of prepreg between two layers of Pacothane release film (Insulectro Corp.) and two steel plates (1/8 inch thick, 12 inch by 12 inch square dimensions). The laminate was formed in the hot press at 5,000 psig for 1 hour. The resulting laminates were between 0.034 inches and 0.036 inches thick, contained between 44 wt% and 46 wt% resin and underwent between 1 wt% and 18 wt% resin overflow during pressing. Five 0.5 inch wide coupons were cut from the laminate using a diamond saw, and the coupon edges were smoothed with sandpaper. The flammability of the coupons was screened by ASTM D3801-06 using an Atlas UL-94 burn chamber, resulting in burn ratings on all sets of five coupons.

**Characterization of Laminates**

Flame retardant and thermal properties of the laminate of Example 2 with 4 wt% phosphorus content and the laminate of Example 3 with 3 wt% phosphorus content were compared to Comparison Example 4 as shown below in Table 1. The flammability (UL-94 ratings) of the laminates was screened by ASTM D3801-06 using an Atlas UL-94 burn chamber (V-O being highest possible rating). The thermogravimetric analysis weight loss was conducted as described above and the TGA rate rise was 10°C/min in N2.

The Laminate Tg measurements were performed similarly to what is described in IPC method IPC-TM-650 (method 2.4.25c), using a 20°C/min temperature rate rise in $N_2$ with the following differences. The isothermal hold temperatures were 200°C for laminates based on DEN-438 resin, 220°C for laminates based on NPCN-703 and 250°C for laminates based on NPCN-703 resin with no flame retardant. The TA Instrument software analyzer was used to determine the glass transition temperature. In some cases, a third scan was performed to determine the delta Tg between the first, second and third scans. A hole saw was used to drill out laminate sample disks of a size proportioned to fit inside a standard aluminum DSC pan. The sample edges were gently sanded for fitting into the pan, and the most in

tact surface of the laminate was positioned facing the bottom of the pan. The sample weight (~40-50 mg) was recorded and a sample pan lid added using a plunger press to seal the lid onto the pan. An empty sealed pan was added to the reference platform.

**TABLE 1. CHARACTERIZATION OF LAMINATES**

| | Inventive Example 2 | Inventive Example 3 | Comparison Example 4 (No Flame retardant) |
|---|---|---|---|
| UL-94 | V-0 | V-1 | Burn |
| Phosphorus content | 4.0% | 3.0% | 0% |
| Tg (Glass transition temperature | 126-131 °C | 136-140°C | 163-172°C |
| TGA 5%-wt Loss | 405-411°C | 405-411°C | 407-421°C |

**EXAMPLE 5**

Use of 6H-Dibenz[c,e][1,2]oxapbosphorin, 6,6'-(1,4-ethanediyl)bis-, 6,6'-dioxide (DOPO) in epoxy laminate (3% phosphorus content) with jet milling

The procedure outlined in Example 3 was followed except that Jet milling was used to further reduce the particle size of the DOPO compound to a $d_{50}$ of about 1.4 $\mu$m prior to combining with the polymer. The flammability of the coupons were screened by ASTM D3801-06 using an Atlas UL-94 burn chamber, resulting in a V-0 rating with 45 seconds total burn time for the two ignitions on all five coupons. No single burn was greater than 10 seconds. The TGA temperature weight loss was 360°C, 381°C and 404°C for 1%, 2% and 5 % weight loss respectively. This example shows that flammability rating was improved over Example 3 by further reducing the particle size of the DOPO compound prior to mixing with the polymer.

**EXAMPLES 6 - 17**

Use of 6H-Dibenz[c,e][1,2]oxaphosphorin, 6,6'-(1,4-ethanediyl)bis-, 6,6'-dioxide (DOPO) in epoxy laminate

The procedure used in Example 5 was used to produce laminates in Examples 6 through 17 with the exception that a 60wt% o-cresol Novolac type epoxy resin (Nan Ya NPCN-703) solution, containing 40 wt% 2-butanone (MEK) was used in place of the phenol epoxy novolac resin and in some examples silica and/or a melamine polyphosphate (Melapur 200 (M-200) from BASF Corporation) were used in the resin mixture. The results are shown in Table 2 below.

**TABLE 2. CHARACTERIZATION OF LAMINATES OF EXAMPLES 6 TO 17**

| Ex | Wt% Ex. 1 (DIDOPO) | Total wt %P | M-200 (wt%) | Silica (wt%) | UL-94 Rating | Total burn time | Tg°C (DSC) | TGA 1% loss | TGA 2% loss | TGA 5% loss |
|---|---|---|---|---|---|---|---|---|---|---|
| 6 | - | - | - | - | Burn | N/A | 198 | 348 | 361 | 382 |
| 7 | 22..2 | 3 | - | - | V-1 | 54 | 156 | 352 | 368 | 396 |
| 8 | 15.6 | 2.1 | - | 30 | V-0 | 41 | 159 | 355 | 375 | 408 |
| 9 | 11.3 | 3 | 11.3 | - | V-0 | 26 | 172 | 332 | 352 | 375 |
| 10 | 10 | 2.68 | 10 | - | V-0 | 41 | 175 | 333 | 349 | 373 |
| 11 | 7 | 1.86 | 7 | 30 | V-0 | 38 | 175 | 343 | 362 | 386 |
| 12 | 9.5 | 2.54 | 9.5 | - | V-0 | 44 | 175 | 336 | 354 | 378 |
| 13 | 6.6 | 1.76 | 6.6 | 30 | V-0 | 19 | 179 | 346 | 363 | 385 |
| 14 | 9 | 2.41 | 9 | - | V-0 | 33 | 177 | 337 | 354 | 376 |
| 15 | 6.3 | 1.67 | 6.3 | 30 | V-1 | 47* | 180 | 339 | 356 | 378 |

(continued)

| Ex | Wt% Ex. 1 (DIDOPO) | Total wt %P | M-200 (wt%) | Silica (wt%) | UL-94 Rating | Total burn time | Tg°C (DSC) | TGA 1% loss | TGA 2% loss | TGA 5% loss |
|---|---|---|---|---|---|---|---|---|---|---|
| 16 | 8.5 | 2.26 | 8.5 | - | V-1 | 46* | 180 | 340 | 356 | 378 |
| 17 | 8 | 2.14 | 8 | - | V-1 | 100 | 177 | 338 | 355 | 378 |
| *One burn greater than 10 seconds.<br>Total wt% P includes phosphorus from M-200 | | | | | | | | | | |

The results show that the melamine polyphosphate significantly increases the glass transition temperature (Tg), which may be used for high temperature or higher thermal stability polymer applications. Incorporation of silica allows for a 1.8 wt% P formulation that retains a V-0 rating.

Components referred to by chemical name or formula anywhere in the specification or claims hereof, whether referred to in the singular or plural, are identified as they exist prior to coming into contact with another substance referred to by chemical name or chemical type (e.g., another component, a solvent, or etc.). It matters not what chemical changes, transformations and/or reactions, if any, take place in the resulting mixture or solution as such changes, transformations, and/or reactions are the natural result of bringing the specified components together under the conditions called for pursuant to this disclosure. Thus the components are identified as ingredients to be brought together in connection with performing a desired operation or in forming a desired composition. Also, even though the claims hereinafter may refer to substances, components and/or ingredients in the present tense ("comprises", "is", etc.), the reference is to the substance, component or ingredient as it existed at the time just before it was first contacted, blended or mixed with one or more other substances, components and/or ingredients in accordance with the present disclosure. The fact that a substance, component or ingredient may have lost its original identity through a chemical reaction or transformation during the course of contacting, blending or mixing operations, if conducted in accordance with this disclosure and with ordinary skill of a chemist, is thus of no practical concern.

## Claims

1. A compound having the following structure:

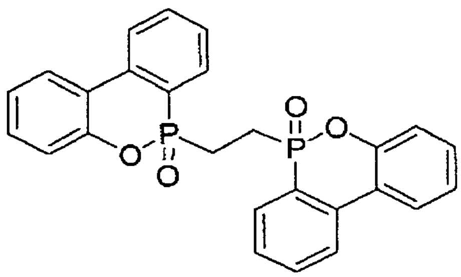

2. The compound of claim 1, which is substantially free of an organic base.

3. The compound of claim 1, wherein the $d_{50}$ particle size is less than about 15 microns.

4. A flame retardant polymer composition comprising a polymer and the compound of Claim 1.

5. The composition of Claim 5, wherein said polymer is polyolcfins, polyesters, polyethers, polyketones, polyamides, polyvinylchlorides, natural and synthetic rubbers, polyurethanes, polystyrenes, poly(meth)acrylates, phenolic resins, polybenzoxazine, polyacetals, polyacrylonitriles, polybutadienes, polystyrenes, polyimides, polyamideimides, polyetherimides, polyphenylsulfides, polyphenylene oxide, polycarbonates, cellulose, cellulose derivatives, cyanate esters, polyphenylene esters, polybutadiene resins, butadiene- styrene resins, butadiene-divinylbenzene-styrene resins, epoxy-modified polybutadiene resins, acrylic or vinyl acetate adhesives, carboxyl -terminated butadiene-acrylonitrile copolymers, phenylene ethers, maleic anhydride-grafted butadiene-styrene copolymers, maleic anhydride-modified 4-methyl-lpentene resins, maleated 1 -butene-ethylene copolymers, resins derived from vinylbenzyl

ether compounds, epoxy resins or mixtures thereof.

**6.** The composition of claim 4, wherein said polymer is polyesters or polyamides.

**7.** The composition of claim 4, wherein said polymer is a phenolic resin or an epoxy resin, and wherein said composition further contains a curing or polymer initiation agent.

**8.** A prepreg or laminate comprising an organic or inorganic reinforcing material and the composition of claim 7.

**9.** The composition of claim 4, wherein the amount of the compound is about 0.1 to about 100 parts by weight per 100 parts by weight of polymer.

**10.** The composition of claim 4, further comprising a melamine polyphosphate.

**11.** The composition of claim 4, further comprising silica.

**12.** A process for preparing the compound of Formula I:

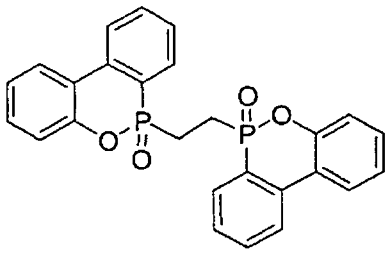

Formula I

comprising reacting a compound of Formula A

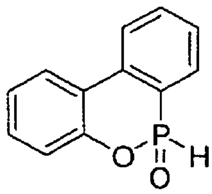

Formula A

with dihaloethane in the presence of a base, wherein wherein said base is potassium methoxide, sodium methoxide, lithium methoxide, potassium ethoxide, sodium ethoxide, lithium ethoxide, potassium t-butoxide, sodium t-butoxide, lithium diisopropyl amide or mixtures thereof.

## Patentansprüche

**1.** Verbindung mit der folgenden Struktur:

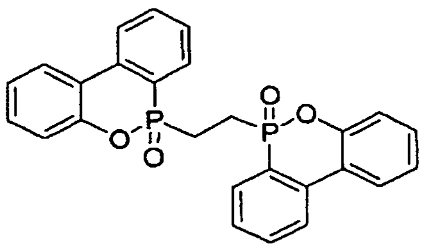

**2.** Verbindung nach Anspruch 1, welche im Wesentlichen frei von einer organischen Base ist.

**3.** Verbindung nach Anspruch 1, wobei die Teilchengröße $d_{50}$ kleiner als etwa 15 Mikron ist.

**4.** Flammhemmende Polymerzusammensetzung, umfassend ein Polymer und die Verbindung nach Anspruch 1.

**5.** Zusammensetzung nach Anspruch 5, wobei das Polymer Polyolefine, Polyester, Polyether, Polyketone, Polyamide, Polyvinylchloride, natürliche und synthetische Kautschuke bzw. Gumme, Polyurethane, Polystyrene, Poly(meth)acrylate, phenolische Harze, Polybenzoxazin, Polyacetale, Polyacrylnitrile, Polybutadiene, Polystyrene, Polyimide, Polyamidimide, Polyetherimide, Polyphenylsulfide, Polyphenylenoxid, Polycarbonate, Cellulose, Cellulosederivate, Cyanatester, Polyphenylenester, Polybutadien-Harze, Butadien-Styren-Harze, Butadien-Divinylbenzen-Styren-Harze, epoxymodifizierte Polybutadien-Harze, acrylische oder Vinylacetat-Klebestoffe, carboxylterminierte Butadien-Acrylnitril-Copolymere, Phenylenether, maleinsäure-anhydridgepfropfte Butadien-Styren-Copolymere, maleinsäureanhydridmodifizierte 4-Methylpenten-Harze, maleierte 1-Buten-Ethylen-Copolymere, von Vinylbenzylether-Verbindungen abgeleitete Harze, Epoxy-Harze oder Gemische davon ist.

**6.** Zusammensetzung nach Anspruch 4, wobei das Polymer Polyester oder Polyamide ist.

**7.** Zusammensetzung nach Anspruch 4, wobei das Polymer ein phenolisches Harz oder ein Epoxy-Harz ist und wobei die Zusammensetzung ferner ein Härtungs- oder Poly-merinitiierungsmittel enthält.

**8.** Prepreg oder Laminat, umfassend ein organisches oder anorganisches Verstärkungsmaterial und die Zusammensetzung nach Anspruch 7.

**9.** Zusammensetzung nach Anspruch 4, wobei die Menge der Verbindung etwa 0,1 bis etwa 100 Gewichtsteile pro 100 Gewichtsteile Polymer beträgt.

**10.** Zusammensetzung nach Anspruch 4, ferner umfassend ein Melaminpolyphosphat.

**11.** Zusammensetzung nach Anspruch 4, ferner umfassend Siliciumdioxid.

**12.** Verfahren zur Herstellung der Verbindung der Formel I:

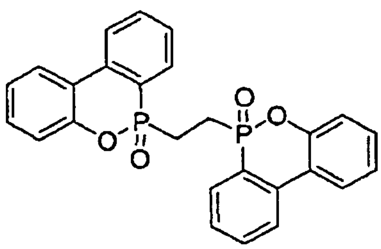

Formel I,

umfassend Umsetzen einer Verbindung der Formel A

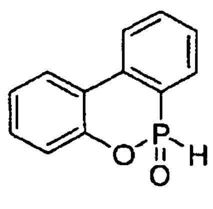

Formel A

mit Dihalogenethan in der Gegenwart einer Base, wobei die Base Kaliummethoxid, Natriummethoxid, Lithiummethoxid, Kaliumethoxid, Natriumethoxid, Lithiumethoxid, Kalium-t-butoxid, Natrium-t-butoxid, Lithiumdiisopropylamid oder Gemische davon ist.

**Revendications**

1. Composé ayant la structure suivante :

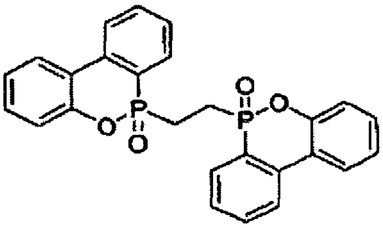

2. Composé selon la revendication 1, qui est essentiellement exempt de base organique.

3. Composé selon la revendication 1, dans lequel la taille de particule $d_{50}$ est inférieure à environ 15 microns.

4. Composition ignifugeante à base de polymère comprenant un polymère et le composé selon la revendication 1.

5. Composition selon la revendication 5, dans laquelle ledit polymère est des polyoléfines, des polyesters, des polyéthers, des polycétones, des polyamides, des polyvinylchlorures, des caoutchoucs naturels et synthétiques, des polyuréthanes, des polystyrènes, des po-ly(méth)acrylates, des résines phénoliques, des polybenzoxazine, des polyacétals, des polyacrylonitriles, des polybutadiènes, des polystyrènes, des polyimides, des polyamideimides, des polyétherimides, des polyphénylsulfures, un oxyde de polyphénylène, des polycarbonates, une cellulose, des dérivés de cellulose, des esters de cyanate, des esters de polyphénylène, des résines de polybutadiène, des résines de butadiène-styrène, des résines de butadiène-divinylbenzène-styrène, des résines de polybutadiène modifié par époxy, des adhésifs acryliques ou d'acétate de vinyle, des copolymères de butadiène-acrylonitrile à terminaison carboxyle, des éthers de phénylène, des copolymères de butadiène-styrène greffé anhydride maléique, des résines de 4-méthyl-1-pentène modifié par l'anhydride maléïque, des copolymères de 1-butène-éthylène maléaté, des résines dérivées des composés éther vinylbenzylique, des résines époxy ou des mélanges de ceux-ci.

6. Composition selon la revendication 4, dans laquelle ledit polymère est des polyesters ou des polyamides.

7. Composition selon la revendication 4, dans laquelle ledit polymère est une résine phénolique ou une résine époxy, et dans laquelle ladite composition contient en outre un agent de réticulation ou d'initiation de la polymérisation.

8. Pré-imprégné ou stratifié comprenant un matériau de renfort organique ou inorganique et la composition selon la revendication 7.

9. Composition selon la revendication 4, dans laquelle la quantité du composé est d'environ 0,1 à environ 100 parties en poids pour 100 parties en poids de polymère.

10. Composition selon la revendication 4, comprenant en outre un polyphosphate de mélamine.

11. Composition selon la revendication 4, comprenant en outre de la silice.

12. Procédé de préparation du composé de Formule I :

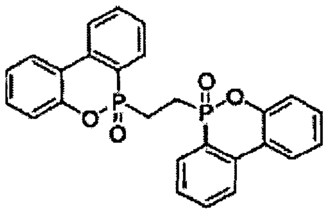

Formule I

comprenant la réaction d'un composé de Formule A

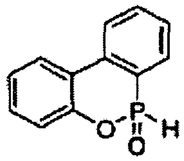

Formule A

avec du dihalogénoéthane en présence d'une base,
dans lequel dans lequel ladite base est le méthoxyde de potassium, le méthoxyde de sodium, le méthoxyde de lithium, l'éthoxyde de potassium, l'éthoxyde de sodium, l'éthoxyde de lithium, le t-butoxyde de potassium, le t-butoxyde de sodium, le diisopropylamide de lithium ou des mélanges de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI111999106619 B
- JP P2001270993 A
- JP P2002193985 A
- US 61319580 A